(19) Europäisches Patentamt
European Patent Office
Office européen des brevets

(11) **EP 4 571 596 A1**

(12) **EUROPEAN PATENT APPLICATION**

(43) Date of publication:
**18.06.2025 Bulletin 2025/25**

(51) International Patent Classification (IPC):
*G06N 10/40* (2022.01)     *G06N 10/20* (2022.01)

(21) Application number: **23215766.9**

(52) Cooperative Patent Classification (CPC):
**G06N 10/20; G06N 10/40**

(22) Date of filing: **12.12.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Forschungszentrum Jülich GmbH 52425 Jülich (DE)**

(72) Inventors:
- **ANSARI, Mohammad**
  **52074 Aachen (DE)**
- **XU, Xuexin**
  **52428 Jülich (DE)**

(74) Representative: **Leinweber & Zimmermann Patentanwalts-PartG mbB European Patent Attorneys Viktualienmarkt 8 80331 München (DE)**

(54) **THREE-QUBIT GATE AND METHOD FOR ITS REALIZATION**

(57)     The invention proposes a three-qubit gate with mainly ZZX interaction. The gate is fast and is of high fidelity.

## Fig. 1

**Description**

The invention relates to a three-qubit gate and a method of its realization based on a quantum circuit structure with three qubits that pairwisely interact through couplers arranged therebetween.

A prior art three-qubit gate, such as Toffoli, is universal for reversible classical computation, enabling arbitrary Boolean operations over quantum registers. Together with the Hadamard gate, it forms a universal quantum gate set. Appending the Toffoli gate to a gate set consisting of CNOT and single-qubit gates is practically helpful for reducing the overhead of gate synthesis. For instance, both the overall gate count and the circuit depth can be reduced to a factor of O(log n) in Shor's algorithm, which factorizes n-bit integers. However, implementing a high-fidelity Toffoli gate is experimentally challenging; thus, the operation is usually realized by decomposing it into single- and two-qubit gates. This decomposition requires at least five two-qubit gates for fully connected qubits and eight for nearest-neighbour connected qubits, considerably reducing its fidelity.

State-of-the-art of three-qubit gates in superconducting qubits realizes the Toffoli gate by applying three microwave pulses of certain frequencies, amplitudes and phase differences on three qubits coupled on a chain. Theory and experiment show such a gate is made of several simultaneous two-qubit interactions that act between qubits so that overall it acts as an effective three-qubit gate.

In the experiment, fidelity is not high, the gate length is long, and therefore the gate is not fast. Further, its realization is limited to one-dimensional linear chain-like interaction. So in 2d circuits such as surface code circuits, there are additional interaction terms in place. The difference in the strength of such interactions and the presence of such an imbalance in the strength of simultaneous two-qubit gates will make the realization of the Toffoli gate difficult.

It is an object of the present invention to provide a new three-qubit gate and a method of its realization that avoids the above shortcomings of the state-of-the-art.

The idea behind this innovation originates from the decomposition of a Toffoli gate, also known as a controlled-controlled NOT gate into its constituent elements. The associated Hamiltonian of a Toffoli gate, denoted as

$$H_{\text{Toffoli}} = -\frac{\pi}{8}(I_0 - Z_0)(I_1 - Z_1)(I_2 - X_2)$$

, describes the dynamics of control and target qubits. Notably, if a ZZX interaction is present, the implementation of the Toffoli gate necessitates only two ZX gate akin to CNOT operations. In comparison to decomposing the Toffoli gate using single- and two-qubit operations, leveraging ZZX interactions drastically reduces the number of CNOT gate to merely 2, thereby significantly reduces resources needed in the overall sequence length.

In accordance with the invention, a method of realizing a three-qubit gate comprises the steps of providing a circuit structure including first and second qubits acting as first and second control qubits, respectively, and a third qubit acting as a target qubit; providing a first coupler arranged between the first and second qubits; providing a second coupler arranged between the second and third qubits; providing a third coupler arranged between the first and third qubits; and controlling circuit parameters of the circuit structure so as to result in the total interaction to become mainly ZZX in the computational basis of the first, second and third qubits.

According to another aspect of the invention, a three-qubit gate comprises a circuit structure including first and second qubits acting as first and second control qubits, respectively and a third qubit acting as a target qubit; a first coupler arranged between the first and second qubits; a second coupler arranged between the second and third qubits; a third coupler arranged between the first and third qubits; and control means configured to control circuit parameters of the circuit structure so as to result in the total interaction to become mainly ZZX in the computational basis of the first, second and third qubits.

In the three-qubit gate of the invention the interaction is mainly ZZX. This is equally important than other three-qubit gates such as the Toffoli. Specifically, a fast and high-fidelity ZZX gate may be realized with cross resonant gate between three qubits interacting with one another. The ZZX three-qubit gate of the invention, similar to the Toffoli gate, entangles three qubits and single-qubit gates and can introduce a universal class of operators on two qubits. Practically, this gate can be made by applying a CR gate on pairwisely interacting qubits. At a certain domain of parameters, all Pauli interactions between qubits suppress to a small value, and the only strong interaction remains to be ZZX.

In particular, the invention uses superconducting qubits with strong coupling strengths therebetween (indirect and direct) with appropriately adapted circuit parameters and microwave driving on a certain parameter.

The qubits may be superconducting qubits, in particular transmons, and the couplers may be bus resonators that are each capacitively coupled to the respective qubits between which the coupler is arranged. In this, the Hamiltonian of the circuit structure in the multilevel basis may be written as

$$H = \sum_{i=1}^{3} \omega_{c_i} c_i^\dagger c_i + \sum_{q=1}^{3} \sum_{n} \omega_q(n_q) |n_q\rangle\langle n_q|$$

$$+ \sum_{i=1}^{3}\sum_{q=1}^{3}\sum_{n} \sqrt{n_q+1}\, g_{qc_i}(c_i - c_i^\dagger)(|n_q\rangle\langle n_q+1| - |n_q+1\rangle\langle n_q|)$$

$$+ \sum_{q \neq q'}\sum_{nm} \sqrt{n_q+1}\sqrt{m_{q'}+1}\, g_{qq'}(|n_q\rangle\langle n_q+1| - |n_q+1\rangle\langle n_q|) \otimes (|m_{q'}\rangle\langle m_{q'}+1| - |m_{q'}+1\rangle\langle m_{q'}|)$$

$$(1).$$

Decoupling the resonators and rotating H using the rotating wave approximation (RWA) gives

$$H_Q = \sum_{q=1}^{3} \sum_{n_q} \widetilde{\omega}_q(n_q) |n_q\rangle\langle n_q|$$

$$+ \sum_{q \neq q'}\sum_{nm} \sqrt{n_q+1}\sqrt{m_{q'}+1}\, J_{qq'}^{n_q m_{q'}}(|n_q\rangle\langle n_q+1| - |n_q+1\rangle\langle n_q|) \otimes (|m_{q'}\rangle\langle m_{q'}+1|$$

$$-|m_{q'}+1\rangle\langle m_{q'}|)$$

$$(2).$$

A CR-type driving Hamiltonian for adapting circuit parameters reads

$$H_d = A_1 \Omega \cos(\omega_d t + \phi_1)\left(a_1 + a_1^\dagger\right) + A_2 \Omega \cos(\omega_d t + \phi_2)\left(a_2 + a_2^\dagger\right) + A_3 \Omega \cos(\omega_d t + \phi_3)\left(a_3 + a_3^\dagger\right)$$

$$(3).$$

$H_{tot}$ is the sum of $H_Q$ represented in equation (2) and $H_d$ represented in equation (3). Block-diagonalizing $H_{tot}$ and rewriting it in terms of Pauli matrices with the computational basis | C1,C2,T), wherein C1 denotes the first control qubit, C2 denotes the second control qubit and T denotes the target qubit, yields

$$H^{dia} = \alpha_{ZII}ZII + \alpha_{IZI}IZI + \alpha_{IIZ}IIZ + \alpha_{ZZI}ZZI + \alpha_{ZIZ}ZIZ + \alpha_{IZZ}IZZ + \alpha_{ZZZ}ZZZ$$

$$(4)$$

$$H^{off} = \alpha_{ZIX}ZIX + \alpha_{IZX}IZX + \alpha_{ZIY}ZIY + \alpha_{IZY}IZY + \alpha_{ZZX}ZZX + \alpha_{ZZY}ZZY + \alpha_{IIX}IIX + \alpha_{IIY}IIY$$

$$(5).$$

Here, $\omega_d = $ -Tr[$H^{dia}$IIZ]/4 is the dressed frequency of the target qubit T.

Controlling circuit parameters of the circuit structure in accordance with the invention so to result in the total interaction to become mainly ZZX may be attained by maximizing the Pauli coefficient $\alpha_{ZZX}$ of the ZZX interaction term in equation (5) while the Pauli coefficients of the remaining qubit interactions in equations (4) and (5) are suppressed or zeroed. In particular, tuning all driving phases $\phi_{1,2,3}$ in equation (3) to be either 0 or rr causes all y rotations to vanish. This results in

$$\alpha_{ZIY} = \alpha_{IZY} = \alpha_{IIY} = \alpha_{ZZY} = 0$$

$$(6).$$

Further, by choosing certain circuit parameters such as coupler frequencies and driving amplitude, $\{\alpha_{ZIX}, \alpha_{I2X}, \alpha_{IIX}\}$ can be suppressed.

A specific example is a circuit with three transmons on a triangle coupled via three pairwise shared couplers. In the absence of driving, these qubits will carry some unwanted ZZ and ZZZ interactions. Adding a CR pulse not only changes ZZZ and ZZ values but also introduces other Pauli interaction terms. However, microwave phases and amplitudes can be tuned so that the total interaction left will be ZZX so that all other interactions are either zero or negligible in magnitude. Single qubit rotation like ZII or IZI can also be eliminated by echoing the CR pulse. In particular, ZZX can be as strong as 1.5 MHz, while other interactions are in the kHz domain.

Specifically, ZZX may be greater than the other Pauli interaction terms at least by a factor of 100, preferably by a factor of 500, and even more preferably by a factor of 1,000.

Advantageous embodiments of the invention will now be described, by way of example, with reference to the accompanying drawings in which

Fig. 1    shows an embodiment of the invention with three qubits connected in a triangular configuration;

Fig. 2    shows a diagram representing Pauli Coefficients of the configuration of Fig. 1 as a function of driving amplitude;

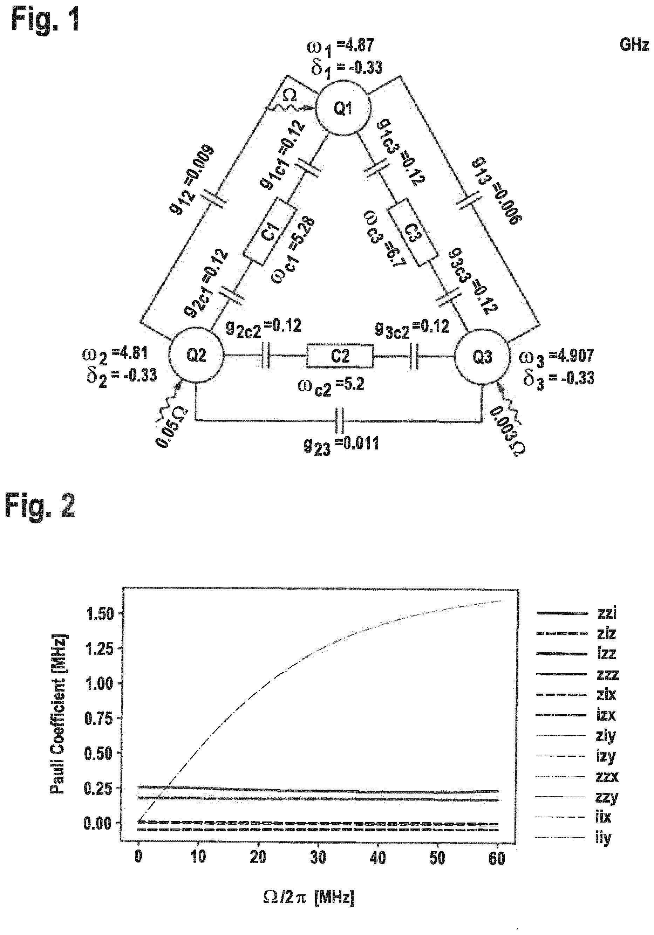

In Figure 1, reference symbol Q1 designates a first qubit acting as a control qubit, reference symbol Q2 designates a second qubit acting as a second control qubit, and reference symbol Q3 designates a third qubit acting as a target qubit. A coupler C1 is arranged between qubit Q1 and qubit Q2 having one end thereof capacitively coupled to qubit Q1 with coupling strength $g_{1c1}$ and having the other end thereof capacitively coupled to qubit Q2 with coupling strength $g_{2c1}$. In addition to the indirect coupling via the coupler C1, there exists direct capacitive coupling between qubits Q1 and Q2 with coupling strength $g_{12}$. Further, a coupler C2 is arranged between qubits Q2 and Q3 having one end thereof capacitively coupled to qubit Q2 with coupling strength $g_{2c2}$ and having the other end thereof capacitively coupled to qubit Q3 with coupling strength $g_{3c2}$. In addition to the indirect coupling via the coupler C2, there exists direct capacitive coupling between qubits Q2 and Q3 with coupling strength $g_{23}$. Similarly, a coupler C3 is arranged between qubits Q1 and Q3 having one end thereof capacitively coupled to qubit Q1 with coupling strength $g_{1c3}$ and having the other end thereof capacitively coupled to qubit Q3 with coupling strength $g_{3c3}$. In addition to the indirect coupling via coupler C3, there exists direct capacitive coupling between qubits Q1 and Q3 with coupling strength $g_{13}$.

In this embodiment, qubits Q1, Q2, and Q3 are superconducting qubits, specifically transmons. Couplers C1, C2, and C3 are bus resonators.

In Figure 1, frequencies of bus resonators C1, C2, and C3 are indicated as $\omega_{c1}$, $\omega_{c2}$, and $\omega_{c3}$, respectively. Frequencies of qubits Q1, Q2, and Q3 are indicated as $\omega_1$, $\omega_2$, and $\omega_3$, respectively. Anharmonicities of qubits Q1, Q2, and Q3 are indicated as $\delta_1$, $\delta_2$, and $\delta_3$, respectively. Exemplary values of these parameters are also indicated in Figure 1.

The Hamiltonian description of the circuits of Figure 1 has been set out above in formula (1) to (5). There are also indicated conditions for zeroing or suppressing part of the Pauli Coefficients in formula (4) and (5). With these conditions under which all driving phases $\phi_{1,2,3}$ in formula (3) are either 0 or $\pi$, the embodiment of Fig. 1 when choosing driving ratios $A_1 = 1$, $A_2 = 0.05$ and $A_3 = 0.003$ to thereby totally eliminate IZX, the following Pauli Coefficients are obtained

$$\alpha_{ZZX} = 0.05720\Omega$$

$$\alpha_{ZIX} = -0.00076\Omega$$

$$\alpha_{IIX} = 0.00007\Omega$$

$$(7).$$

Fig. 2 shows the strengths of the remaining interactions whose Pauli Coefficients have not been zeroed in accordance with the above, as a function of the driving amplitude $\Omega$ in formula (3). As can be seen from Fig. 2, ZZX is the main contribution to the total interaction in a broad interval centered around $\Omega = 30$ MHz.

**Claims**

1. Method of realizing a three-qubit gate comprising the steps of:

   providing a circuit structure including first (Q1) and second (Q2) qubits acting as first and second control qubits, respectively, and a third qubit (Q3) acting as a target qubit;
   providing a first coupler (C1) arranged between the first (Q1) and second qubits (Q2);
   providing a second coupler (C2) arranged between the second (Q2) and third qubits (Q3);
   providing a third coupler (C3) arranged between the first (Q1) and third qubits (Q3); and
   controlling circuit parameters of the circuit structure so as to result in the total interaction to become mainly ZZX in the computational basis of the first, second and third qubits.

2. Method according to claim 1, wherein the qubits are superconducting qubits.

3. Method according to anyone of the preceding claims, wherein the qubits are transmons.

4. Method according to anyone of the preceding claims, wherein the couplers are bus resonators that are each capacitively coupled to the respective qubits between which the coupler is arranged.

5. Method according to anyone of the preceding claims, wherein controlling of circuit parameters includes microwave driving on at least one of the parameters.

6. Method according to anyone of the preceding claims, wherein controlling of circuit parameters includes tuning of microwave phase and/or amplitude of at least one driving pulse.

7. Method according to anyone of the preceding claims, wherein ZZX is at least by a factor of 100, preferably by a factor of 500, even more preferably by a factor of 1,000 greater than other Pauli interaction terms.

8. Three-qubit gate comprising:

   a circuit structure including first and second qubits acting as first and second control qubits, respectively and a third qubit acting as a target qubit;
   a first coupler arranged between the first and second qubits;
   a second coupler arranged between the second and third qubits;
   a third coupler arranged between the first and third qubits; and
   control means configured to control circuit parameters of the circuit structure so as to result in the total interaction to become mainly ZZX in the computational basis of the first, second and third qubits.

9. Three-qubit gate according to claim 8, wherein the qubits are superconducting qubits.

10. Three-qubit gate according to anyone of the preceding claims, wherein the qubits are transmons.

11. Three-qubit gate according to anyone of claims 8 to 10, wherein the couplers are bus resonators that are each capacitively coupled to the respective qubits between which the coupler is arranged.

12. Three-qubit gate according to anyone of claims 8 to 11, wherein the control means is configured to apply microwave driving on at least one of the parameters.

13. Three-qubit gate according to anyone of claims 8 to 12, wherein the control means is configured to tune phase and/or amplitude of at least one microwave driving pulse.

# Fig. 1

# Fig. 2

| | Europäisches Patentamt European Patent Office Office européen des brevets | **EUROPEAN SEARCH REPORT** | **Application Number** EP 23 21 5766 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAKER ANEIRIN J ET AL: "Single shot i-Toffoli gate in dispersively coupled superconducting qubits", APPLIED PHYSICS LETTERS, AMERICAN INSTITUTE OF PHYSICS, 2 HUNTINGTON QUADRANGLE, MELVILLE, NY 11747, vol. 120, no. 5, 3 February 2022 (2022-02-03), XP012263277, ISSN: 0003-6951, DOI: 10.1063/5.0077443 [retrieved on 2022-02-03] * page 1 - page 5; figures 1,2 * | 1-13 | INV. G06N10/40 G06N10/20 |
| A | TANAY ROY ET AL: "A programmable three-qubit superconducting processor with all-to-all connectivity", ARXIV.ORG, CORNELL UNIVERSITY LIBRARY, 201 OLIN LIBRARY CORNELL UNIVERSITY ITHACA, NY 14853, 3 September 2018 (2018-09-03), XP081685963, DOI: 10.1103/PHYSREVAPPLIED.14.014072 * page 1 - page 6; figures 1,2 * | 1-13 | |
| A | KIM YOSEP ET AL: "High-fidelity three-qubit iToffoli gate for fixed-frequency superconducting qubits", NATURE PHYSICS, NATURE PUBLISHING GROUP, LONDON, GB, vol. 18, no. 7, 2 May 2022 (2022-05-02), pages 783-788, XP037900468, ISSN: 1745-2473, DOI: 10.1038/S41567-022-01590-3 [retrieved on 2022-05-02] * page 783 - page 787; figures 1,5 * | 1-13 | TECHNICAL FIELDS SEARCHED (IPC) G06N |

-/--

The present search report has been drawn up for all claims

| Place of search | Date of completion of the search | Examiner |
|---|---|---|
| The Hague | 24 May 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 23 21 5766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TIANQI CAI ET AL: "Perturbation impact of spectators and spurious qubit interactions on a cross-resonance gate in a tunable coupling superconducting circuit", ARXIV.ORG, CORNELL UNIVERSITY LIBRARY, 201 OLIN LIBRARY CORNELL UNIVERSITY ITHACA, NY 14853, 6 January 2021 (2021-01-06), XP081853234, * Sections I-III; figures 1,3,4 * | 1-13 | |
| A | WO 2018/164784 A1 (NORTHROP GRUMMAN SYSTEMS CORP [US]) 13 September 2018 (2018-09-13) * paragraph [0004] - paragraph [0005]; paragraph [0013] - paragraph [0034]; figures 5,6 * | 1-13 | |
| A | ILYA A SIMAKOV ET AL: "High-fidelity transmon coupler activated CCZ gate on fluxonium qubits", ARXIV.ORG, CORNELL UNIVERSITY LIBRARY, 201 OLIN LIBRARY CORNELL UNIVERSITY ITHACA, NY 14853, 29 August 2023 (2023-08-29), XP091600546, * Sections I-IV; figure 1 * | 1-13 | **TECHNICAL FIELDS SEARCHED (IPC)** |

The present search report has been drawn up for all claims

| Place of search | Date of completion of the search | Examiner |
|---|---|---|
| The Hague | 24 May 2024 | Klasen, TJ |

EPO FORM 1503 03.82 (P04C01)

## ANNEX TO THE EUROPEAN SEARCH REPORT
## ON EUROPEAN PATENT APPLICATION NO.

EP 23 21 5766

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | Publication date | Patent family member(s) | Publication date |
|---|---|---|---|
| WO 2018164784 A1 | 13-09-2018 | AU 2018230035 A1 | 12-09-2019 |
| | | AU 2020210132 A1 | 13-08-2020 |
| | | CA 3054163 A1 | 13-09-2018 |
| | | CA 3139960 A1 | 13-09-2018 |
| | | EP 3593295 A1 | 15-01-2020 |
| | | JP 6847380 B2 | 24-03-2021 |
| | | JP 2020509496 A | 26-03-2020 |
| | | KR 20190112102 A | 02-10-2019 |
| | | US 10074792 B1 | 11-09-2018 |
| | | US 2018342663 A1 | 29-11-2018 |
| | | US 2020091396 A1 | 19-03-2020 |
| | | WO 2018164784 A1 | 13-09-2018 |

EPO FORM P0459

For more details about this annex : see Official Journal of the European Patent Office, No. 12/82